# EUROPEAN PATENT APPLICATION

(11) **EP 3 940 546 A1**
(43) Date of publication of application: **19.01.2022**
(21) Application number: 19920481.9
(22) Date of filing: 15.03.2019
(51) Int. Cl.: G06F 16/20

(54) **DATA INTEGRATION EVALUATION SYSTEM AND DATA INTEGRATION EVALUATION METHOD**

(71) Applicant: Hitachi, Ltd., Tokyo 100-8280 (JP)
(72) Inventor: KAKEDA, Tomoaki, Tokyo 100-8280 (JP); MITSUYAMA, Satoshi, Tokyo 100-8280 (JP)
(74) Representative: MERH-IP Matias Erny Reichl Hoffmann Patentanwälte PartG mbB
(86) International application number: PCT/JP2019/011018
(87) International publication number: WO 2020/188670

(57) **Abstract**

Upon data integration for integrating a plurality of pieces of data, each of which has one or more columns, in a column direction, a data integration evaluation system 1 evaluates data integration plans in response to a user's request. The data integration evaluation system 1 includes: a user requirement accepting unit 200 that accepts the data to be integrated and requirements for the data integration; an integration plan evaluation unit 300 that creates integration plans, that is, an integration plan for each column of the data, on the basis of data values of the data and the requirements, which are accepted by the user requirement accepting unit 200, and evaluates the created integration plan; and an evaluation result display unit 400 that outputs a result of the evaluation by the integration plan evaluation unit 300.

## Description

### TECHNICAL FIELD

The present invention relates to a data integration evaluation system and a data integration evaluation method and is suited for application to a data integration evaluation system and data integration evaluation method for evaluating justness of data integration with respect to data for analysis, which is created by combining a plurality of pieces of data together for the purpose of data analysis.

### BACKGROUND ART

Conventionally, when analyzing data, it has been necessary to create data for analysis by integrating a plurality of pieces of data acquired from a data source. It becomes easier for a program to execute data analysis processing as the data for analysis is formed into a matrix format.

For example, PTL 1 discloses a method for integrating a plurality of data tables in a record direction (hereinafter also referred to as a horizontal direction in this description) and evaluating integration of the data tables on the basis of coincidence and multiplicity of values included in the data.

### CITATION LIST

### PATENT LITERATURE

PTL 1: Japanese Patent Application Laid-Open (Kokai) Publication No. 2003-216618

### SUMMARY OF THE INVENTION

### PROBLEMS TO BE SOLVED BY THE INVENTION

The conventional method as disclosed in PTL 1 combines the plurality of pieces of data together in the horizontal direction as mentioned above. On the other hand, if data acquired for each date or data acquired for each equipment are to be integrated, it is required that the plurality of pieces of data should be combined together in a column direction (hereinafter also referred to as a vertical direction in this description). However, in a case of combining the data in the vertical direction, if the configuration of columns within the data varies, a problem occurs so that it is not easy to combine such data properly.

More specifically, for example, if operating data of equipment is acquired on a day-and-time basis and data is acquired in another file and such data files are acquired over a long period of time, the acquired data items (columns) may increase or decrease and the sequential order of columns may be switched as settings of the equipment are changed during the period. Furthermore, also if the operating data is acquired from different equipment, it can be predicted that a data form or unit of each column may vary because of the circumstances such as different settings of the equipment.

Then, if the above-described data are to be combined together in the vertical direction, it is required by the conventional method that a person in charge of analysis has to judge the possibility of integration individually by checking the data content one by one or contacting an administrator of the equipment, which takes a lot of troubles. Furthermore, regarding the operating data or the like of the equipment, redundant headers or the like may sometimes be omitted in order to reduce the data volume; and, therefore, the person in charge of analysis cannot sometimes judge the content at a glance. Furthermore, if the number of pieces of the data to be integrated increases, processing by human power becomes no longer realistic.

When the data of different acquisition environments are to be integrated in the column direction (the vertical direction) as described above, they do not necessarily have the identical alignment order of columns or the identical data format, or rather their alignment order of columns or their data format often varies between the data. So, it has been very difficult to integrate the data properly by the conventional method.

The present invention was devised in consideration of the above-described circumstances and aims at proposing a data integration evaluation system and data integration evaluation method capable of creating an integration plan(s) for integrating the data in the column direction and evaluating the justness of the integration plan(s) even when conducting the data integration by using a plurality of pieces of data of different acquisition environments.

### MEANS TO SOLVE THE PROBLEMS

In order to solve the above-described problems, provided according to the present invention is a data integration evaluation system including, upon a request for data integration for integrating a plurality of pieces of data, each of which has one or more columns, in a column direction: a user requirement accepting unit that accepts the data to be integrated and requirements for the data integration; an integration plan evaluation unit that creates integration plans, that is, an integration plan for each column of the data, on the basis of data values of the data and the requirements, which are accepted by the user requirement accepting unit, and evaluates the integration plan; and an evaluation result display unit that outputs a result of the evaluation by the integration plan evaluation unit.

Furthermore, in order to solve the above-described problems, provided according to the present invention is a data integration evaluation method including, upon a request for data integration for integrating a plurality of pieces of data, each of which has one or more columns, in a column direction: a user requirement accepting step of accepting the data to be integrated and requirements for the data integration; an integration plan creation step of creating integration plans, that is, an integration plan for each column of the data, on the basis of data values of the data and the requirements, which are accepted by the user requirement accepting unit; an integration plan evaluation step of evaluating the integration plan created in the integration plan creation step; and an evaluation result display step of outputting a result of the evaluation by the integration plan evaluation step.

### ADVANTAGEOUS EFFECTS OF THE INVENTION

According to the present invention, the justness of the integration plans for which the data integration is conducted in the column direction can be evaluated even when conducting the data integration by using the plurality of pieces of data of the different acquisition environments.

### BRIEF DESCRIPTION OF DRAWINGS

Fig. 1 is a block diagram illustrating a hardware configuration example of a data integration evaluation system according to this embodiment;
Fig. 2 is a block diagram illustrating a functional configuration example of the data integration evaluation system according to this embodiment;
Fig. 3 is a diagram illustrating a specific example of a data table;
Fig. 4 is a diagram illustrating a specific example of a profile table;
Fig. 5 is a diagram illustrating a specific example of a requirement template table;
Fig. 6 is a diagram illustrating a specific example of a requirement table;
Fig. 7 is a diagram illustrating a specific example of an integration plan management
table;
Fig. 8 is a diagram illustrating a specific example of a data file;
Fig. 9 is a flowchart illustrating the entire processing sequence of data integration evaluation processing;
Fig. 10 is a diagram illustrating one example of a requirement registration screen;
Fig. 11 is a flowchart illustrating a processing sequence example of user requirement accepting processing;
Fig. 12 is a flowchart illustrating a processing sequence example of integration plan evaluation processing; and
Fig. 13 is a diagram illustrating a specific example of a result display screen.

### DESCRIPTION OF EMBODIMENTS

An embodiment of the present invention will be explained below in detail with reference to the drawings. Incidentally, data tables are illustrated in some drawings; and when indicating a specified row (record) in these data tables, the expression "an N-th row" is used for the sake of simplicity where it should be stated as "an N-th row in data rows from which rows with an item (column) name described therein have been removed."

### (1) System Configuration

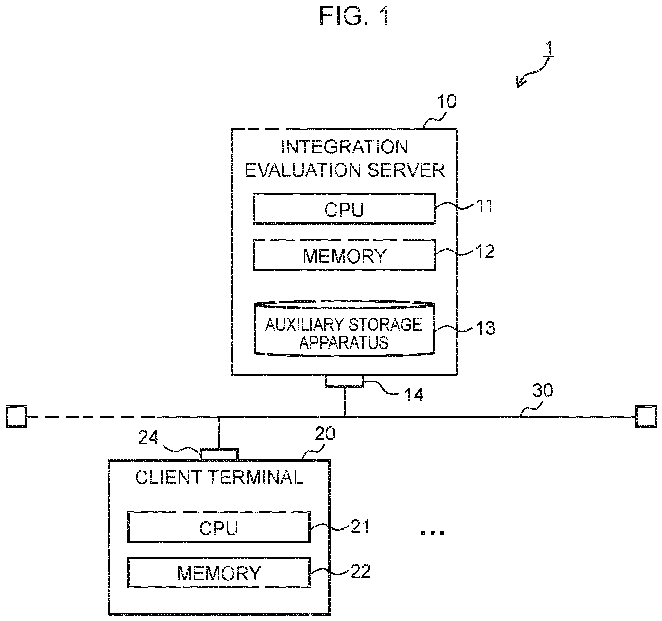

Fig. 1 is a block diagram illustrating a hardware configuration example of a data integration evaluation system according to this embodiment. With the data integration evaluation system 1 according to this embodiment illustrated in Fig. 1, an integration evaluation server 10 and a client terminal 20 are connected to each other via a LAN (Local Area Network) 30 using their respective LAN ports 14, 24 as connecting ports.

The integration evaluation server 10 is, for example, a common server and includes a CPU (Central Processing Unit) 11, a memory 12, and an auxiliary storage apparatus 13. The auxiliary storage apparatus 13 may be configured to connect to the outside of the integration evaluation server 10. The client terminal 20 is, for example, a common PC and includes a CPU 21 and a memory 22. It may be configured such that a plurality of client terminals 20 are connected to the integration evaluation server 10 via the LAN 30. Moreover, the network for connecting the integration evaluation server 10 and the client terminal(s) 20 is not limited to the LAN 30, but any arbitrary network connection may be used whether it is wired or wireless.

With the data integration evaluation system 1 which is configured in the above-described manner, a user operates the client terminal 20 to access the integration evaluation server 10 via the LAN 30 and inputs data and requirements for data integration (user requirements) to the integration evaluation server 10. The integration evaluation server 10 accepts the data and the user requirements, which are input from the user, creates an evaluation plan for the data integration (an integration plan), evaluates this plan, and presents the evaluation result of the integration plan. As a result, the user can refer, from the client terminal 20, to the evaluation result of the integration plan which is presented by the integration evaluation server 10.

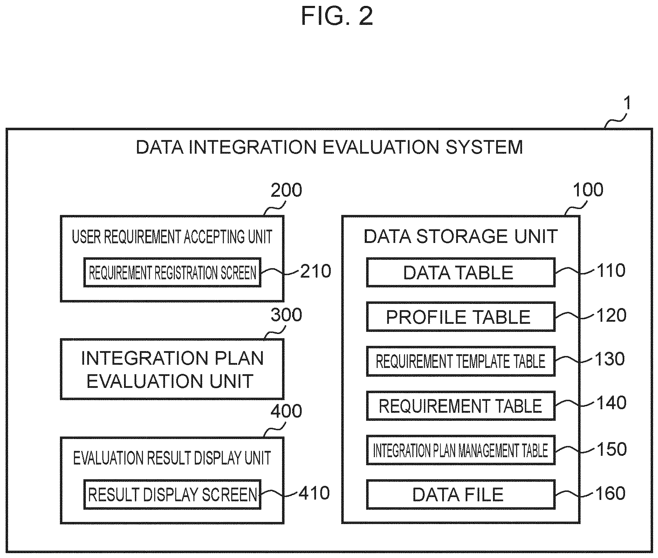

Fig. 2 is a block diagram illustrating a functional configuration example of the data integration evaluation system according to this embodiment.

The data integration evaluation system 1 is configured, as illustrated in Fig. 2, by including a data storage unit 100, a user requirement accepting unit 200, an integration plan evaluation unit 300, and an evaluation result display unit 400. Incidentally, the data integration evaluation system 1 may be simply referred to as the "system 1" in the following explanation.

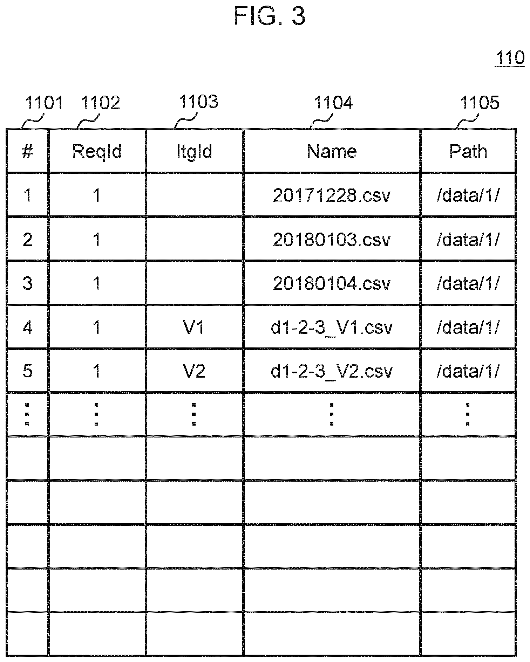

The data storage unit 100 is implemented by the auxiliary storage apparatus 13 for the integration evaluation server 10 illustrated in Fig. 1 and stores various kinds of data. Fig. 2 illustrates, as the data stored by the data storage unit 100, a data table 110, a profile table 120, a requirement template table 130, a requirement table 140, an integration plan management table 150, and a data file 160 and the details of each of these pieces of data will be described later with reference to specific examples illustrated in Fig. 3 to Fig. 8.

On the other hand, the user requirement accepting unit 200, the integration plan evaluation unit 300, and the evaluation result display unit 400 are implemented by the CPU 11 for the integration evaluation server 10 decompressing a specified program into the memory 12 and executing the program.

Incidentally, according to this explanation, the CPU 11 for the integration evaluation server 10 can create and evaluate the data integration plan by decompressing the specified program into the memory 12 and executing it and can provide a display of a specified screen (a requirement registration screen 210 and a result display screen 410) via a GUI or the like, so that the functional configuration of the data integration evaluation system 1 illustrated in Fig. 2 can be implemented by the integration evaluation server 10; however, this embodiment is not limited to this example. Then, as mentioned earlier with reference to Fig. 1, the user can, for example, refer to, and execute operations on, the above-mentioned screens from the client terminal 20 via the LAN 30.

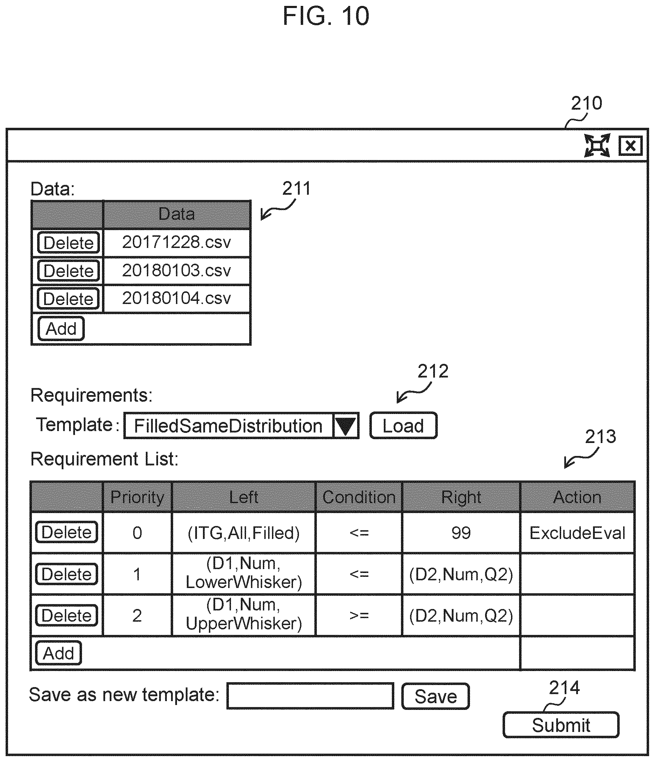

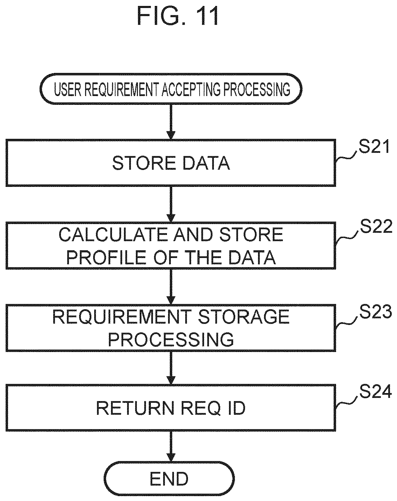

The user requirement accepting unit 200: displays a requirement registration screen 210 for the user to input integration target data and requirements for the data integration (user requirements) when demanding evaluation of the data integration; and accepts the data and the user requirements in response to the user's input operation on the requirement registration screen 210. The details of processing by the user requirement accepting unit 200 (user requirement accepting processing) and the requirement registration screen 210 will be described later with reference to Fig. 10 and Fig. 11.

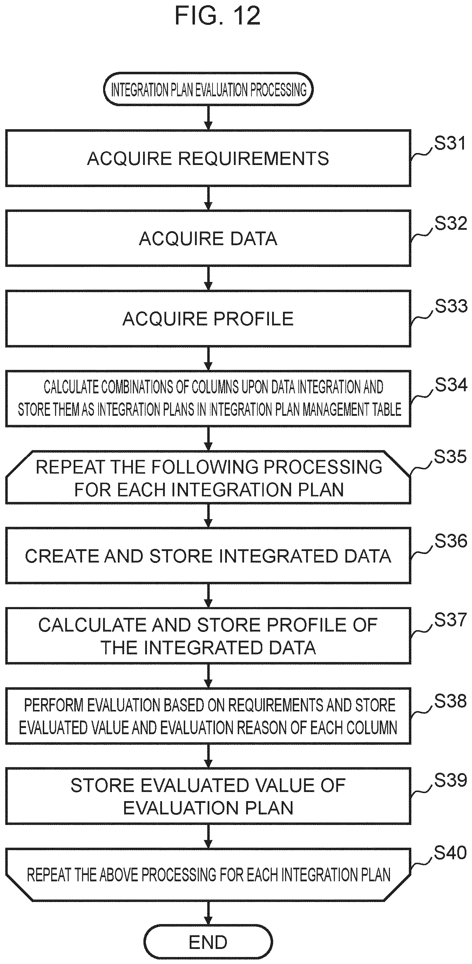

The integration plan evaluation unit 300 creates a data integration plan(s) on the basis of the data and the user requirements accepted by the user requirement accepting unit 200 and evaluates justness of each integration plan. The details of processing by the integration plan evaluation unit 300 (integration plan evaluation processing) will be described later with reference to Fig 12.

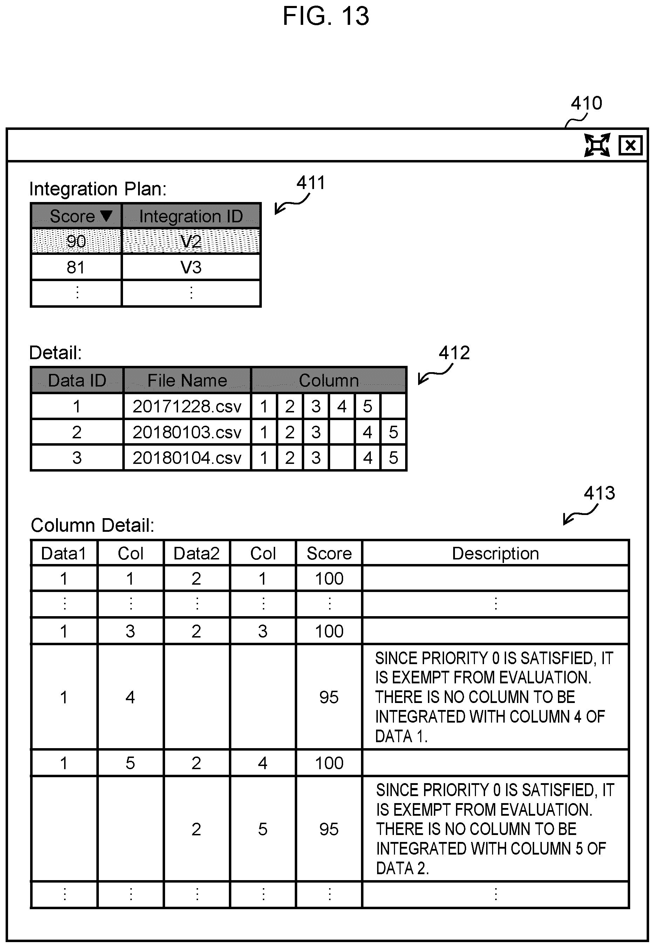

The evaluation result display unit 400 displays information of the integration plan(s), the evaluation result, and so on about the data integration plan(s) evaluated by the integration plan evaluation unit 300 (a result display screen 410). The details of the result display screen 410 will be described later with reference to Fig. 13. Incidentally, this embodiment is explained by stating that the evaluation result display unit 400 displays the result display screen 410; however, the result output of the present invention is not limited to displaying, but other output methods such as printing and writing files may also be used.

### (2) Structures of Various Kinds of Data

The various kinds of data stored in the data storage unit 100 (the data table 110, the profile table 120, the requirement template table 130, the requirement table 140, the integration plan management table 150, and the data file 160) will be individually explained in detail.

### (2-1) Data Table

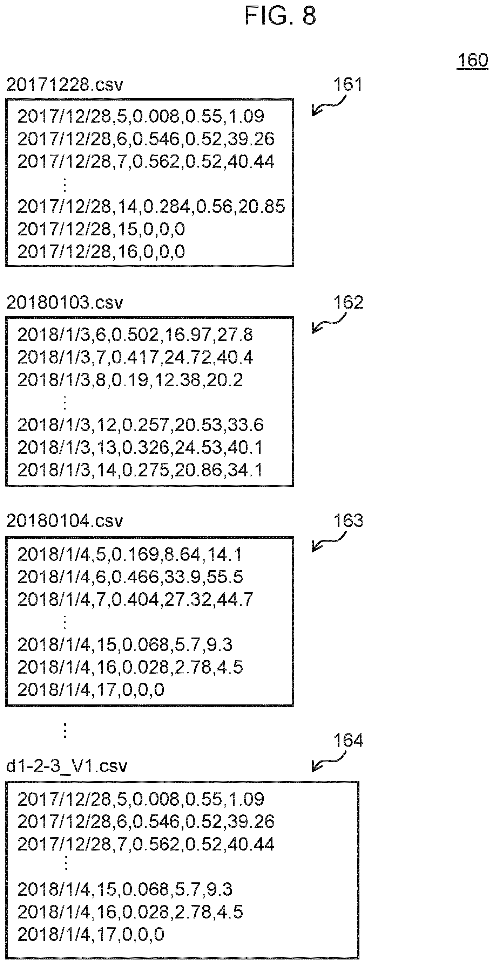

Fig. 3 is a diagram illustrating a specific example of the data table. The data table 110 illustrated in Fig. 3 is a table which stores information of data (the data file 160) managed by the system 1. Specific examples are shown in Fig. 8 described later and the data file 160 includes not only data which have been input by the user (data 161 to 163 in Fig. 8), but also data created by the integration plan evaluation unit 300 as integration plans (data 164 in Fig. 8). Then, each piece of data of the data file 160 is designed to store one record in each column.

A table structure of the data table 110 will be explained in detail with reference to Fig. 3.

An item 1101 stores a serial number of management target data (data number). In the following explanation, the serial number will be hereinafter expressed as #1, #2, etc. by using "#." An item 1102 is a column which stores a request ID of the serial number (Req ID) assigned by the system 1 to the relevant demand (or request) when the user demands the evaluation of the data integration.

An item 1103 is a column which stores an integration ID (Itg ID) for identifying the data of an integration plan that is an evaluation target with the request ID (the item 1102). In the case of Fig. 3, data #4 and #5 are data of integration plans, so that the integration IDs "V1" and "V2" are assigned to them. On the other hand, data #1 to #3 are not data of integration plans, so that no integration ID is assigned to them.

An item 1104 is a column which stores the name of the data (a file name). In this example, the file name of an integration plan is designed to be automatically generated in accordance with specified naming rules when the integration plan is created by the system 1. Specifically, "d" is placed at the top, then the serial number of the integrated data (the item 1101) is connected with a hyphen, and the integration ID (the item 1103) is further connected with an underscore, thereby generating a character string.

An item 1105 is a column which stores a storage location (path) of the relevant data in the integration evaluation server 1.

Incidentally, in the case of Fig. 3, all the data managed by the data table 110 are data files having a CSV extension; however, the data format in this embodiment is not limited to this example, but data of other file formats or data or the like stored in an RDB (Relational Database), etc. may also be employed.

### (2-2) Profile Table

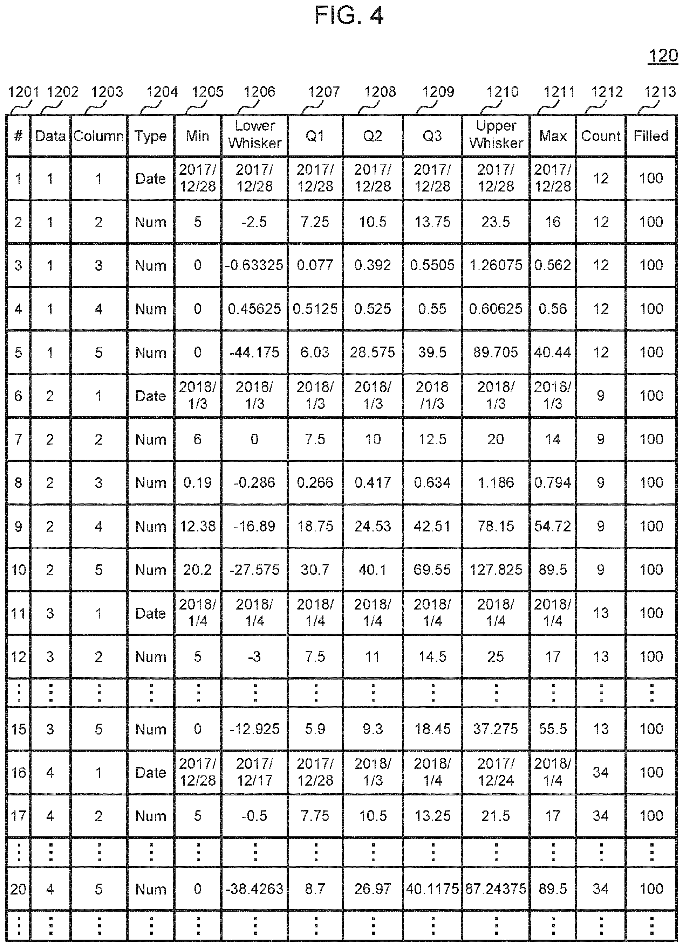

Fig. 4 is a diagram illustrating a specific example of the profile table. The profile table 120 illustrated in Fig. 4 is a table which stores profile information (hereinafter simply referred as a profile(s)) of the data managed by the system 1. In the case of Fig. 4, statistic values (statistics) used in a box-and-whisker plot are used as an example of the profile.

A table structure of the profile table 120 will be explained in detail with reference to Fig. 4.

An item 1201 stores the serial number of a profile managed by the profile table 120 (profile number). With the profile table 120, the profile number by the serial number is assigned to each combination of the data number (an item 1202) and the column (an item 1203) described below.

The item 1202 stores the serial number assigned to the target data (data number). The data number of the item 1202 corresponds to the item 1101 in the data table 110. The item 1203 is a column which stores the column number for the relevant data and, for example, numbers are assigned sequentially from the left-side column.

An item 1204 is a column which indicates a data form stored in the corresponding column of the relevant record. In this example, "Date" which means the date and "Num" which means numbers are indicated; however, the data form which can be used by the data integration evaluation system 1 according to this embodiment is not limited to these examples and other data forms such as character string data can also be applied. For example, when the character string data is applied, it may be utilized by processing the character string data by, for example, setting the length of the character string as a profile.

A column of an item 1205 and subsequent columns in the profile table 120 describe statistical information about the data stored in the corresponding column of the relevant record. In this example, the statistics used in the box-and-whisker plot are used as mentioned earlier.

Specifically speaking, the item 1205 describes the minimum value of the data stored in the corresponding column of the relevant record; and an item 1211 describes the maximum value. Moreover, items 1207, 1208, and 1209 sequentially store a first quartile (Q1), a second quartile (Q2), and a third quartile (Q3) which express the data stored in the corresponding column of the relevant record by means of the box-and-whisker plot. Of these items, the second quartile (Q2) stored in the item 1280 corresponds to a median value of the data stored in the corresponding column of the relevant record.

Furthermore, the item 1206 stores a lower-end whisker value (Lower Whisker) which is a whisker value on the lower side of the box-and-whisker plot; and the item 1210 describes an upper-end whisker value (Upper Whisker) which is a whisker value on the upper side. By using an interquartile range (IQR) calculated as the difference "Q3-Q1" between the third quartile and the first quartile under this circumstance, the lower-end whisker value is calculated as "Q1-1.5×IQR" and the upper-end whisker value is calculated as "Q3+1.5×IQR."

Furthermore, an item 1212 describes the number of lines of the data stored in the corresponding column of the relevant record; and an item 1213 indicates a ratio of data regarding which values are entered in the corresponding columns of the relevant record (a data filled rate [Filled]), which is expressed as a percentage.

### (2-3) Requirement Template Table

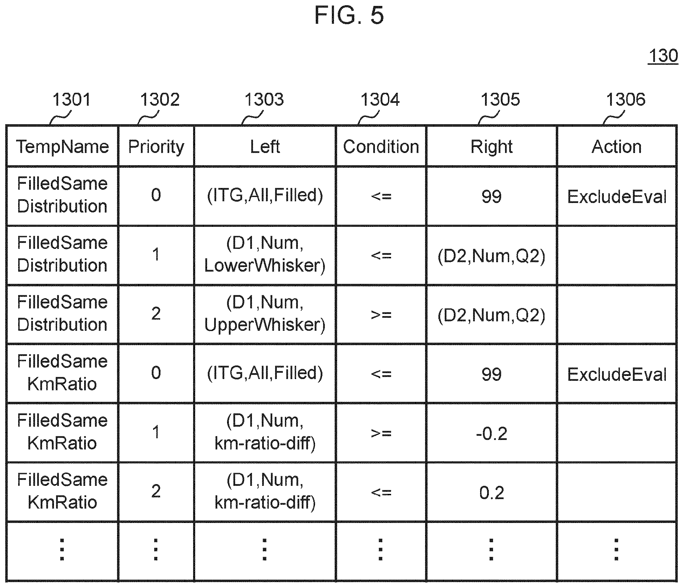

Fig. 5 is a diagram illustrating a specific example of the requirement template table. The requirement template table 130 illustrated in Fig. 5 is table data for managing one or more requirement templates. The requirement template(s) is to record and invoke a plurality of data requirements by gathering and labelling a plurality of requirements (data requirements) regarding the data integration. In this embodiment, the system 1 does not necessarily have to retain the requirement templates; however, as the requirement templates are stored, it is possible to simplify the input of the user requirements by the user.

A table structure of the requirement template table 130 will be explained in detail with reference to Fig. 5.

An item 1301 stores the name of a requirement template (a template name). In the requirement template table 130, one requirement template is formed of a plurality of records having the same template name. Specifically speaking, in the case of Fig. 5, a 1^{st} row to a 3^{rd} row form one requirement template and a 4^{th} row and subsequent rows form another requirement template.

An item 1302 is a column which stores priority of the relevant requirement in the requirement template (Priority); and items 1303 to 1306 store specific information of the relevant requirement.

In this example, the requirement is expressed with a conditional expression and components of the conditional expression are stored in the items 1303 to 1305. Furthermore, regarding only requirements whose priority is "0," an "action" stored in the item 1306 is executed if the relevant requirement is satisfied; and regarding requirements with other priority values, an evaluated value becomes high if the relevant requirement is satisfied. The requirements will be explained in further detail.

The item 1303 is a column which stores the left-side component of the conditional expression indicating the requirement. Referring to the content of the item 1303, the relevant description is closed with parentheses and the first element within the parentheses represents target data. Specifically speaking, "ITG" means integrated data and "Dx (x=1, 2)" means data registered by the user. Incidentally, when the data are integrated, "1" is assigned to the above-mentioned "x" if the relevant data is an integrating side; and "2" is assigned to the above-mentioned "x" if the relevant data is an integrated side. The integrating side indicates the side which comes first in vertical coupling and which comes on the left side in horizontal coupling. The second element within the parentheses in the item 1303 represents a target column. Specifically speaking, "ALL" means all columns and "Num" means numerical value columns. The third element within the parentheses in the item 1303 represents a metric for evaluation (evaluation metric). If the evaluation metric corresponds to a profile column (each item in the profile table 120 in Fig. 4) under this circumstance, it means to conduct the evaluation by referring to the relevant profile, in other words, to conduct the evaluation on the basis of the statistic. On the other hand, if the evaluation metric is a value different from the profile column, it means to conduct the evaluation according to a statistical method indicated by the relevant evaluation metric.

The item 1305 is a column which stores the right-side component of the conditional expression indicating the relevant requirement. If the content of the item 1305 is a description closed with parentheses, it may be considered in the same way as the item 1303. Furthermore, the item 1304 is a column which stores an operator connecting the left side and the right side in the conditional expression indicating the requirement. Specifically speaking, the requirement can be evaluated by checking whether the conditional expression indicated in the items 1303 to 1305 is satisfied or not.

Now, a specific example of the evaluation according to the statistical method indicated by the evaluation metric will be explained. If the item 1303 of the requirement stores "(D1, Num, km-ratio-diff)," the following evaluation is conducted according to k-means clustering, which is one of representative statistical methods, by setting data D1 of an integration plan (the integrating side) as target data and setting columns expressed with "Num" as target columns.

Firstly in a first step, a composition ratio of Data D1 and Data D2 of an integration plan is calculated. More specifically, in the profile table 120 in Fig. 4, the line count metric (the item 1212) of the target column is referenced with respect to each of the data D1, D2 to be integrated according to the integration plan. Under this circumstance, assuming that the number of lines of a column in which D1 exists is "D1_C" and the number of lines of a column in which D2 exists is "D2_C," a data composition ratio of D1 can be calculated as "D1_C/(D1_C+D2_C)."

Next, in a second step, clustering is executed on one-dimensional data, in which the target columns of D1 and D2 are integrated, to classify the data into two classes of the k-means clustering. Then, a ratio of D1 in one of the classes divided by clustering is calculated.

Furthermore, in a third step, the difference between the ratios calculated in the first step and the second step and this is defined as "km-ratio-diff." Then, whether the requirement is satisfied or not can be evaluated by using this difference value and comparing it with the value of the item 1305. For example, if the conditional expression of the relevant requirement is "(D1, Num, km-ratio-diff) ≥ -0.2" (see a 5^{th} row in Fig. 5), it can be evaluated that the relevant requirement is satisfied if the above-mentioned difference value is "-0.2" or more.

Lastly, the item 1306 will be explained. The item 1306 is a column which stores the corresponding action (Action) when the requirement (the conditional expression indicated in the items 1303 to 1305) is satisfied. In this example, the item 1306 stores information only for the requirement whose priority is "0" (Priority 0) as explained earlier. Specifically speaking, the item 1306 defines an action of "Exclude Eval." "Exclude Eval" means that the target column of this requirement is exempt from evaluation. Specifically speaking, when the requirement with Priority 0 is satisfied, the target column will be exempt from evaluation of an "integration plan evaluated value (Total Eval)."

### (2-4) Requirement Table

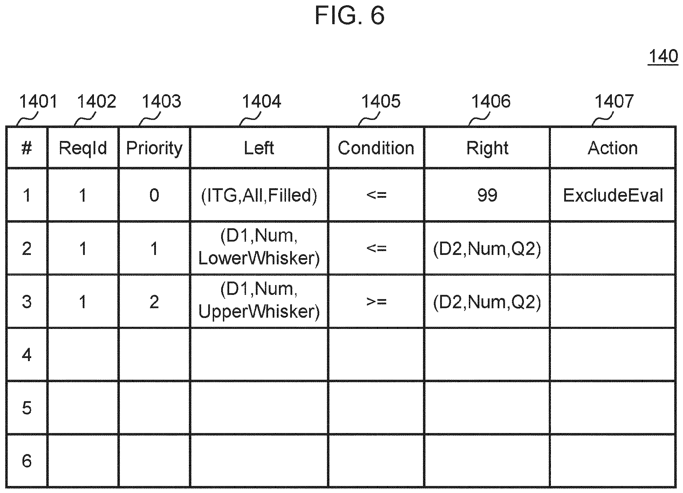

Fig. 6 is a diagram illustrating a specific example of the requirement table. The requirement table 140 illustrated in Fig. 6 is a data table for managing requirements for the data integration, which are input from the user (user requirements).

A table structure of the requirement table 140 will be explained in detail with reference to Fig. 6. However, regarding items which are similar to those of the requirement template table 130 in Fig. 5, a repeated explanation is omitted.

An item 1401 stores the serial number of a user requirement managed by the requirement table 140 (a requirement number). For example, if a user requirement is input by using a requirement template, the requirement number is assigned to each of a plurality of requirements constituting the relevant requirement template.

An item 1402 is a column which stores a request ID of the serial number assigned by the system 1 to the relevant demand (or request) when the user demands the evaluation of the data integration. The request ID in the item 1402 corresponds to the item 1102 in the data table 110 (see Fig. 3).

An item 1403 is a column which stores priority of the relevant requirement. An item 1404 is a column which stores the left-side component of a conditional expression indicating the relevant requirement. An item 1405 is a column which stores an operator connecting the left side and the right side of the conditional expression indicating the relevant requirement. An item 1406 is a column which stores the right-side component of the conditional expression indicating the relevant requirement. An item 1407 is a column which stores the corresponding action when the requirement is satisfied. Items 1403 to 1407 have the configuration of columns similar to that of the items 1302 to 1306 in the requirement template table 130 illustrated in Fig. 5, so that a repeated explanation is omitted.

### (2-5) Integration Plan Management Table

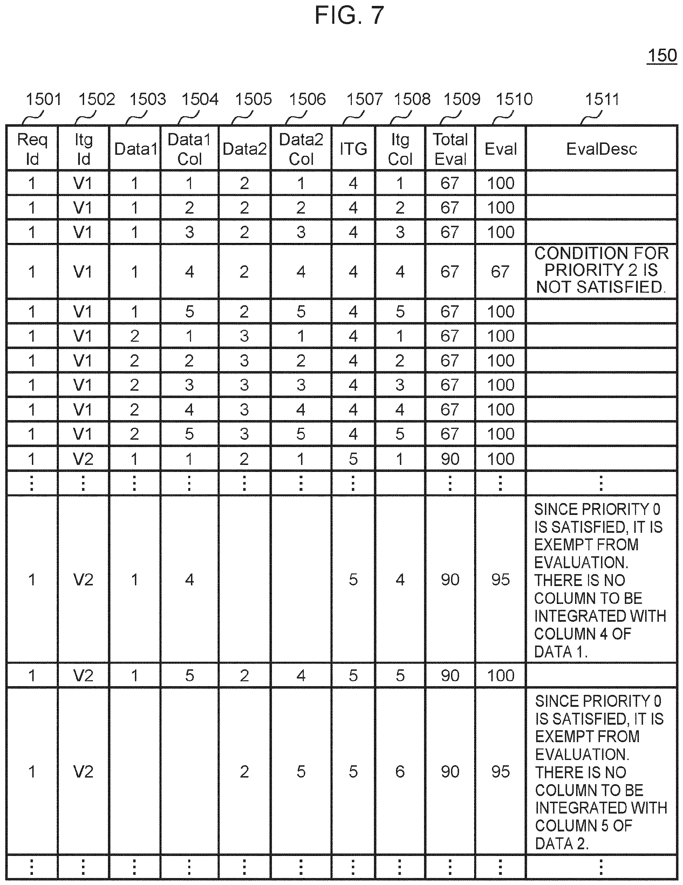

Fig. 7 is a diagram illustrating a specific example of the integration plan management table. The integration plan management table 150 illustrated in Fig. 7 is a data table for managing data integration plans created by the integration plan evaluation unit 300. In the integration plan management table 150, one record is used for each combination of connected columns between the integrating-side data (D1) and the integrated-side data (D2), so that one integration plan is formed of a plurality of records having the same combination of D1 and D2.

A table structure of the integration plan management table 150 will be explained in detail with reference to Fig. 7.

An item 1501 is a column which stores a request ID of the user's demand (request) which triggered the creation of an integration plan. The request ID in the item 1501 corresponds to the item 1102 in the data table 110 or the item 1402 in the requirement table 140 (see Fig. 3 and Fig. 6).

An item 1502 is a column which stores an integration ID for identifying the relevant integration plan. The integration ID in the item 1502 corresponds to the item 1103 in the data table 110 (see Fig. 3). "V1" and "V2" are indicated as the integration ID in Fig. 7; and regarding these ID's, the first character represents an integration direction (V represents the vertical direction and H, which is not indicated in the drawing, represents the horizontal direction) and the second and subsequent characters represent the serial number of the integration plan corresponding to the relevant request.

An item 1503 is a column which stores a data number indicating the integrating-side data D1 upon integration. Furthermore, an item 1504 is a column which stores a column number indicating an integrating column in the integrating-side data D1 (the integration column). On the other hand, regarding the integrated-side data D2 upon the integration, an item 1505 stores a data number and an item 1506 stores a column number. Incidentally, the data number stored in the item 1503 or the item 1505 corresponds to the data number in the item 1202 in the profile table 120 and the column number stored in the item 1504 or the item 1506 corresponds to the column number in the item 1203 in the profile table 120 (see Fig. 4).

An item 1507 is a column which stores a data number (ITG) indicating data integrated according to the integration definition. An item 1508 is a column which stores a column number (Itg Col) indicating an integrated column in the integrated data.

An item 1509 is a column which stores an evaluated value for the relevant integration plan (an integration plan evaluated value [Total Eval]). One integration plan evaluated value is assigned to one integration plan.

An item 1510 is a column which stores an evaluated value of integration evaluation regarding the relevant record (an individual evaluated value [Eval]). Since the individual evaluated value is assigned to each combination of the columns combined together according to the integration plan, there is a possibility that the value of each record may vary. An item 1511 is a column which stores a reason for the integration evaluation regarding the relevant record, that is, a reason for the column-based integration evaluation (an evaluation reason).

Incidentally, a specific method for deciding the evaluated values and the evaluation reason stored in the items 1509 to 1511 will be explained later in detail when explaining integration plan evaluation processing.

### (2-6) Data File

Fig. 8 is a diagram illustrating a specific example of the data file. In the data file 160 illustrated in Fig. 8, data 161 to 163 are indicated as specific examples of actual data which is acquired by specified equipment and is input by the user and data 164 is indicated as a specific example of integration plan data created by the integration plan evaluation unit 300. All the data 161 to 164 are data files of the CSV format.

Of these pieces of data, each piece of the data 161 to 163 is observation data having five columns (which will be referred to as a first column, a second column, and so on up to a fifth column) which are observed on different dates. Referring to the profile table 120 in Fig. 4, as it is obvious from the fact that the data form (the item 1204) of all the records with the column number (the item 1203) "1" is "Date," the first column of all the data 161 to 163 is composed of date information. Furthermore, since the data form of all other column numbers is "Num," the second column and subsequent columns of the data 161 to 163 are numerical value data.

However, this example is designed so that there is a discrepancy in some part of the configuration of columns within the data 161 to 163. As a specific example of background where the discrepancy of the configuration of the columns occurred, let us assume that observation of data stored in the fourth column of the data 161 which was observed on "2017/12/28" has been stopped since the year 2018. As a result, regarding the data 162 which was observed on "2018/01/03" and the data 163 which was observed on "2018/01/04," data corresponding to the fourth column of the data 161 was not acquired and data corresponding to the fifth column of the data 161 was moved into, and acquired in, the fourth column of each data 162, 163. Furthermore, it is shown that another data which was not observed regarding the data 161 was acquired in the fifth column of the data 162, 163.

Accordingly, the data 161 to 163 are a plurality of pieces of data of different acquisition environments; and it has been conventionally not easy to combine such data together appropriately without information regarding the above-mentioned background. On the other hand, the data integration evaluation system 1 according to this embodiment can find out the composition of the above-mentioned background and evaluate the justness of the integration plan on the basis of the statistical information included in each piece of the data 161 to 163 and the statistical processing on each piece of the data 161 to 163.

Furthermore, the file name "d1-2-3_V1.csv" is assigned to the data 164, which is a specific example of the integration plan data, according to the "specified naming rules" described earlier regarding the item 1104 (data name) in Fig. 3. Specifically speaking, the data 164 is an integration plan of combining data to which #1, #2, and #3 are assigned in the data table 110 (corresponding to the data 161, 162, and 163), and "V1" is assigned as the integration ID 1103.

Incidentally, as explained earlier with regard to the data form of the profile table 120 referenced in Fig. 4, this example is explained by mainly being focused on numerical value data; however, the data forms which can be used by the data integration evaluation system 1 according to this embodiment are not limited to the data forms such as numeral values and dates, but other data forms such as the character string data can also be applied. When doing so, for example, when the character string data is applied, it may be utilized by processing the character string data by, for example, setting the length of the character string as a profile.

### (3) Data Integration Evaluation Processing

The processing of the data integration evaluation system 1 according to this embodiment for creating an evaluation plan for the data integration (an integration plan) on the basis of the user's demand (or request), evaluating it, and outputting the evaluation result (data integration evaluation processing) will be explained in detail.

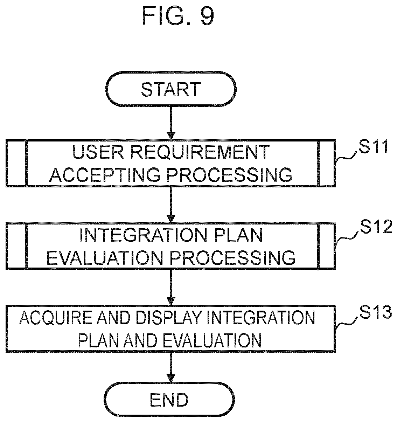

Fig. 9 is a flowchart illustrating the entire processing sequence for the data integration evaluation processing.

Firstly, when the user demands the evaluation of the data integration, the user requirement accepting unit 200 for the integration evaluation server 10 presents the requirement registration screen 210 for registering detailed information of the relevant demand (or request). The user can refer to the requirement registration screen 210 from the client terminal 20 via the LAN 30 and decides integration target data and requirements for the data integration (user requirements) by performing an input operation on the requirement registration screen 210.

Fig. 10 is a diagram illustrating an example of the requirement registration screen. For example, in the case of the requirement registration screen 210 illustrated in Fig. 10, an area 211 makes it possible to decide data to be input; and an area 212 makes it possible to evoke any one requirement template from requirement templates stored in the system 1, that is, the requirement templates managed by the requirement template table 130. An area 213 displays a list of detailed information of the requirements constituting the requirement template evoked in the area 212. Moreover, an area 213 makes it possible to delete any unnecessary requirement from the list display and add a new requirement. Lastly, the data and the user requirements with the content displayed on the requirement registration screen 210 are entered by executing a button 214.

Referring back to the explanation of Fig. 9, when the user's operation is performed on the requirement registration screen 210, the user requirement accepting unit 200: accepts the data and the user requirements which are decided on the requirement registration screen 210; and executes user requirement accepting processing for storing them in the data storage unit 100 (step S11). As a result of the user requirement accepting processing, the user requirement accepting unit 200 returns the request ID of the user's demand accepted by this processing.

Next, the integration plan evaluation unit 300 executes integration plan evaluation processing for creating a data integration plan on the basis of the data and the user requirements, which are stored in the data storage unit 100 in step S11, and conducting the evaluation of the integration plan (step S12). Information created and calculated by the integration plan evaluation processing is further stored in the data storage unit 100 (the auxiliary storage apparatus 13).

Lastly, the evaluation result display unit 400 acquires information obtained by the processing in step S12 (that is, the detailed information of the integration plan, the evaluation result, etc.) from the data storage unit 100 with respect to the integration plan corresponding to the request ID returned by the user requirement accepting processing and displays these pieces of information in a specified format on the result display screen 410 (step S13).

### (3-1) User Requirement Accepting Processing

Fig. 11 is a flowchart illustrating a processing sequence example of the user requirement accepting processing. The user requirement accepting processing is executed by the user requirement accepting unit 200 as mentioned earlier.

Referring to Fig. 11, the user requirement accepting unit 200 firstly stores the data, which was input by the user on the requirement registration screen 210 (see the area 211 in Fig. 10), in the data storage unit 100 (step S21). More specifically, the user requirement accepting unit 200 stores the actual data in the data file 160 and links a file name and a path of the data to the request ID of the user and stores them in the data table 110.

Next, the user requirement accepting unit 200 calculates a profile of the data stored in step S21 and stores it in the profile table 120 (step S22). The details of the profile stored in the profile table 120 are as described earlier with reference to Fig. 4.

Then, the user requirement accepting unit 200 links the user requirements which were input by the user on the requirement registration screen 210 (see the areas 212, 213 in Fig. 10), to the user's request ID and stores them in the requirement table 140 in the data storage unit 100 (step S23).

Lastly, the user requirement accepting unit 200 sets a return value to the request ID and terminates the user requirement accepting processing (step S24).

### (3-2) Integration Plan Evaluation Processing

Fig. 12 is a flowchart illustrating a processing sequence example of the integration plan evaluation processing. The integration plan evaluation processing is executed by the integration plan evaluation unit 300 as mentioned earlier.

Referring to Fig. 12, the integration plan evaluation unit 300 firstly acquires the user requirements, which were input upon request, from the requirement table 140 on the basis of the request ID returned by the user requirement accepting processing (step S31).

Next, the integration plan evaluation unit 300 acquires a storage location of the data, which was input upon request, from the data table 110 on the basis of the request ID and acquires the data from that storage location (the data file 160) (step S32).

Then, the integration plan evaluation unit 300 acquires a profile of each data, which was acquired in step S32, from the profile table 120 on the basis of the request ID (step S33).

Subsequently, the integration plan evaluation unit 300 creates an integration plan for integrating the data on the basis of the user requirements acquired in step S31 and the profile of the data acquired in step S33 and stores specified information of the integration plan in the integration plan management table 150 (step S34). Under this circumstance, the integration plan evaluation unit 300 performs a brute-force calculation of all combinations of the columns upon the data integration and stores the above-mentioned specified information of each combination in the integration plan management table 150. When this happens, a case where no column to be combined exists is also considered as a target of the combination calculation. Specifically speaking, for example, a record with the request ID "1" and the integration ID "V2" in Fig. 7 applies to the above-described case. Furthermore, the above-mentioned specified information is information stored in the following items of the integration plan management table 150, that is, the request ID (the item 1501), the integration ID (the item 1502), the data number of the data D1 (the item 1503), the column number indicating the integration column of the data D1 (the item 1504), the data number of the data D2 (the item 1505), and the column number indicating the integration column of the data D2 (the item 1506).

Next, in steps S35 to S40, the integration plan evaluation unit 300 repeats the processing from step S36 to S39 with respect to all the integration plans while sequentially selecting one integration plan from the integration plans created in step S34.

In step S36, the integration plan evaluation unit 300 integrates the data acquired in step S32 in accordance with the definition of the selected integration plan. Furthermore, the integration plan evaluation unit 300 stores the integrated data (integration plan data) in the data file 160 and adds that information to the data table 110. Furthermore, the integration plan evaluation unit 300 adds the numbers indicating the data and column after the integration corresponding to the integration definition of each column in the integration plan management table 150 (the items1507, 1508).

In step S37, the integration plan evaluation unit 300 acquires the profile of the integration plan data integrated in step S36 and stores the profile in the profile table 120.

In step S38, the integration plan evaluation unit 300 checks the user requirements acquired in step S31 and calculates a column-based evaluated value (an individual evaluated value) on the basis of the state of satisfying the relevant requirement for the integration plan data. Furthermore, the integration plan evaluation unit 300 enters the calculated individual evaluated value and its evaluation reason in the items 1510, 1511 of the relevant record of the integration plan management table 150. A specific evaluation method in step S38 will be explained later.

In step S39, the integration plan evaluation unit 300 integrates the individual evaluated values calculated in step S38 on an integration plan basis and calculates an evaluated value for one selected integration plan (an integration plan evaluated value). Furthermore, the integration plan evaluation unit 300 enters the calculated integration plan evaluated value in the item 1509 of the relevant record in the integration plan management table 150. A specific evaluation method in step S39 will be explained later.

By executing the processing in the above-described steps S31 to S40, the integration plan evaluation unit 300 can create an integration plan on the basis of the requested data and the user requirements and evaluate the justness of each integration plan.

### (3-2-1) Evaluation Logic of Individual Evaluated Value

Regarding the calculation of the column-based evaluated value (the individual evaluated value) in step S38, one example of its evaluation logic will be explained in detail.

When calculating the individual evaluated value, the integration plan evaluation unit 300 conducts the evaluation according to the priority of the target requirement. Under this circumstance, the target requirement is indicated in a record including the processing target request ID (the item 1402) in the requirement table 140 in Fig. 6 and the priority of each requirement is described in the item 1403. In this example, a subtractive method of starting from "100" is applied to the evaluation; and if there is any requirement which is not satisfied, weight of that requirement is subtracted from the evaluated value. Specifically speaking, if all the requirements are satisfied, the individual evaluated value becomes "100"; and also in a case of a column which is not evaluated depending on the requirement(s), the subtraction is not performed and the individual evaluated value thereby becomes "100."

A method of reflecting the priority for the individual evaluation in the evaluated value will be explained by referring to specific data which have been illustrated in the drawings.

Firstly in a first step, a total value of priorities is calculated. In the case of Fig. 6, the priorities are "1" and "2," so that the total value is "3." The priority "0" will be explained in later steps.

In a second step, the priorities are sorted in ascending order and in descending order, respectively. In the case of the ascending order, the priorities are sorted in the order of "1" and "2"; and in the case of the descending order, the priorities are sorted in the order of "2" and "1."

In a third step, each of the values sorted in the descending order in the second step is divided by the total value of the priorities calculated in the first step, thereby obtaining the weight. Specifically speaking, the values "2" and "1" in the descending order are divided by the total value "3," so that their weights are "2/3" and "1/3."

In a fourth step, the values sorted in the ascending order in the second step are decided as the priorities, which are associated with the weight calculated in the third step, thereby deciding the weight for each priority. Specifically speaking, the values sorted in the ascending order represent the priorities and the priorities sorted in the descending order are decided as the weights. Specifically speaking, the weight of the priority "1" is "2/3" and the weight of the priority "2" is "1/3."

In a fifth step, the evaluation of each combination of the columns is conducted (that is, on a row basis of the integration plan management table 150); and if the requirement is not satisfied, the weight calculated in the fourth step is subtracted from "1" and the obtained value is multiplied by 100, thereby obtaining the individual evaluated value. Specifically speaking, for example, regarding the 4^{th} row of the integration plan management table 150 in Fig. 7 (Req Id=1, Itg ID=V1, Data 1=1, Data 1 Col=4, Data 2=2, Data 2 Col=4), when the evaluation of each requirement in the requirement table 140 is conducted with reference to the profile table 120 in Fig. 4, you can see that the requirement with the priority "2" is not satisfied. Under this circumstance, the individual evaluated value (Eval) is calculated as "(1-1/3)x100=66.6 ≈67."

In a sixth step, the requirement with the priority "0" is evaluated. In this example, if the conditional expression is satisfied regarding the requirement with the priority "0," the "action (for example, "Exclude Eval")" stored in the item 1407 is executed and then the individual evaluated values calculated before and in the fifth step are stored in the item 1510 of the target rows in the integration plan management table 150. On the other hand, if the conditional expression is not satisfied regarding the requirement with the priority "0," the individual evaluated values calculated before and in the fifth step are stored in the item 1510 without executing the above-mentioned "action."

Incidentally, in this example, if the requirement with the priority "1" or higher is not satisfied upon the evaluation in the fifth step, or if the requirement with the priority "0" is satisfied upon the evaluation in the sixth step, information to that effect is indicated, as the evaluation reason, in the item 1511 of the integration plan management table 150.

The above-described evaluation logic will be specifically checked with reference to Fig. 7 and other drawings. For example, in the case of the 4^{th} row of the integration plan management table 150 in Fig. 7 (Req Id=1, Itg ID=V1, Data1=1, Data 1 Col=4, Data 2=2, Data 2 Col=4), the requirement with the priority "2" (Priority 2) is not satisfied and the individual evaluated value is calculated as "67" in the fifth step as explained earlier. Next, the evaluation of the requirement with the priority "0" (Priority 0) in the sixth step is checked. Referring to the 1^{st} row of the requirement table 140 in Fig. 6, regarding the requirement with Priority 0, "the data filled ratio (Filled) is 99% or lower with respect to all the columns (All) of the integrated data (ITG)." Under this circumstance, the profile corresponding to the items 1507, 1508 (ITG=4, Itg Col=4) of the 4^{th} row of the integration plan management table 150 can be checked in the profile table 120 in Fig. 4 and then the data filled ratio (Filled) of the item 1213 is "100," so that the requirement with the Priority 0 is not satisfied. Therefore, in a stage where the first to sixth steps have been implemented, the individual evaluated value "67" calculated in the fifth step is stored in the item 1510 and the evaluation reason stating the "condition for Priority 2 is not satisfied" in the fifth step is indicated in the item 1511 in the 4^{th} row of the integration plan management table 150.

Furthermore, as another example, a case of a 3^{rd} row from the bottom of the integration plan management table 150 in Fig. 7 (Req Id=1, Itg ID=V2, Data 1=1, Data 1 Col=4, Data 2=blank, Data 2 Col=blank) is the case where it is assumed that when the fifth step and the sixth step are executed in the same manner as in the preceding paragraph, the following result is obtained: the requirement with the Priority 0 is satisfied in the sixth step. In this case, this column is exempt from evaluation in accordance with the action "Exclude Eval" defined for the requirement with the Priority 0 and the evaluation reason to that effect stating that "since Priority 0 is satisfied, it is exempt from evaluation" is indicated in the item 1511. Incidentally, the subtraction is not performed for the individual evaluated value and "100" is stored in the item 1510; and referring to Fig. 7, the value of the item 1510 of the relevant row is "95." This reason will be explained in the next seventh step.

In the seventh step, if an integration destination column is not selected, that is, if either one of the item 1504 and the item 1506 becomes blank in the integration plan management table 150, the individual evaluated value which has been calculated in the preceding steps is multiplied by 0.95 as a penalty. For example, in the case of the 3^{rd} row from the bottom of the integration plan management table 150 which was checked in the preceding paragraph, the individual evaluated value which has been calculated before and in the sixth step is "100," but the column number (the item 1506) of the integrated-side data D2 is blank, so that the integration destination column is not selected. Consequently, the individual evaluated value "100" is multiplied by 0.95, thereby resulting in "95"; and this value is stored as a final individual evaluated value in the item 1510. Furthermore, the evaluation reason stating that "there is no column to be integrated with column 4 of Data1" by the seventh step is added to the item 1511.

This example has the evaluation logic of the penalty as in the seventh step, so that if the integration column is not selected, the evaluated value can be reduced with certainty. Therefore, the evaluated value can be corrected properly so that a high evaluated value can hardly be assigned to the integration plan for which no integration column is selected. As a result, it is possible to avoid the integration plan, for which no integration column is selected, from being easily selected based on the evaluated value.

### (3-2-2) Evaluation Logic of Integration Plan Evaluated Value

Regarding the calculation of the evaluation value on an integration plan basis (the integration plan evaluated value) which is performed in step S39, one example of its evaluation logic will be explained.

When calculating the integration plan evaluated value, the integration plan evaluation unit 300 divides the value of the item 1510 of each of the records constituting the integration plan selected in step S35 in Fig. 12 in the integration plan management table 150, that is, the individual evaluated value (Eval) of each column by 100 to obtain a ratio; and then a value obtained by multiplying these values is decided as the integration plan evaluated value (Total Eval) and is stored in all the items 1509 of the above-described respective records.

Incidentally, in this example, the integration plan is evaluated by means of multiplication as described above; however, this embodiment is not limited to this method and the integration plan may be evaluated by other evaluation methods. For example, an average value of the individual evaluated values may be calculated and this average value may be decided as the integration plan evaluated value.

### (3-3) Evaluation Result Display

Fig. 13 is a diagram illustrating a specific example of the result display screen. The result display screen 410: is, as explained earlier, a screen displayed by the evaluation result display unit 400 after the user requirement accepting processing by the user requirement accepting unit 200 (step S11 in Fig. 9) and the integration plan evaluation processing by the integration plan evaluation unit 300 (step S12 in Fig. 9) are executed; and is to provide the user with the detailed information of the integration plan, the evaluation result, and so on in response to the user's demand (or request) for the evaluation of the data integration.

In a case of the result display screen 410 illustrated in Fig. 13, an area 411 shows a recommended integration plan on the basis of the integration plan evaluated value. In this example, the integration plan evaluated values are listed in a "Score" column in descending order of the integration plan evaluated value calculated by the integration plan evaluation processing and an integration ID of an integration plan corresponding to each score is indicated in an "Integration ID" column. Specifically speaking, in the case of Fig. 13, let us assume that an integration plan with integration ID "V2" and whose score is "90" is most recommended and this integration plan "V2" is selected in the area 411. Then, in the state where any one of the integration plans indicated in the area 411 is selected, the detailed information about the above-selected integration plan is indicated in areas 412, 413.

The area 412 shows the correspondence relationship between the configurations of columns within the respective data of the integration plan on the basis of, for example, the integration plan management table 150. In this example, a "Data ID" column indicates a data number of data included in the selected integration plan; a "File Name" column indicates a file name of the relevant data; and a "Column" column indicates the correspondence between the configurations of columns within the relevant data in a table format. Specifically speaking, in the case of Fig. 13, it is shown that regarding the selected integration plan "V2," the column corresponding to the fourth column of the data "1" does not exist on the data "2" or "3" side and, furthermore, the column corresponding to the fifth column of the data "2" or "3" does not exist on the data "1" side. Incidentally, the file name of the "File Name" column can be acquired by referring to the data table 110.

An area 413 indicates the detailed result of the individual evaluation of each combination of the columns for the integration plan on the basis of the integration plan management table 150. In this example, a "Score" column indicates an individual evaluated value (Eval) which is a column-based integration evaluated value and a "Description" column indicates an evaluation reason (Eval Desc) of the column-based integration evaluation.

In this embodiment as explained above, as a result of the data integration evaluation processing executed by the data integration evaluation system 1, the data whose integration is desired by the user and the requirements for the data integration which is desired by the user (the user requirements) are accepted by the user requirement accepting processing; a plurality of integration plans of the above-mentioned data are created and the integration plans are evaluated according to the statistics or the statistical method designated by the user requirements by the integration plan evaluation processing; and finally, the evaluation result of each integration plan can be presented to the user.

Particularly, the integration plan evaluation processing calculates the individual evaluated values obtained by evaluating the relationship between the columns by using, as a unit, a combination of the columns between the data for the integration plan; the evaluated value of the entire integration plan is calculated based on these individual evaluated values; and, therefore, even if the integration target data requested by the user are data of different acquisition environments or data whose content cannot be judged at a glance by human power as redundant headers or the like are omitted to reduce a data volume, the justness of the integration plan can be evaluated with respect to each integration plan according to which the data are integrated in the column direction. As a result, the evaluation result obtained properly in response to the user's request can be presented by the display of the result display screen 410 by the evaluation result display unit 400.

Incidentally, the present invention is not limited to the aforementioned embodiment, but includes various variations. For example, the aforementioned embodiment has been explained in detail in order to explain the present invention in an easily comprehensible manner and is not necessarily limited to the embodiment having all the configurations explained above. Furthermore, another configuration can be added to, deleted from, or replaced with part of the configuration of the embodiment.

Furthermore, each of the aforementioned configurations, functions, processing units, processing means, etc. may be implemented by hardware by, for example, designing part or all of such configurations, functions, processing units, and processing means by using integrated circuits or the like. Moreover, each of the aforementioned configurations, functions, etc. may be implemented by software by processors interpreting and executing programs for realizing each of the functions. Information such as programs, tables, and files for realizing each of the functions may be retained in memories, storage devices such as hard disks and SSDs (Solid State Drives), or storage media such as IC cards, SD cards, and DVDs.

Furthermore, control lines and information lines which are considered to be necessary for the explanation are illustrated in the drawings; however, not all control lines or information lines are necessarily indicated in terms of products. Practically, it may be assumed that almost all components are connected to each other.

### REFERENCE SIGNS LIST

- 1:: data integration evaluation system (system)
- 10:: integration evaluation server
- 11:: CPU
- 12:: memory
- 13:: auxiliary storage apparatus
- 14:: LAN port
- 20:: client terminal
- 21:: CPU
- 22:: memory
- 24:: LAN port
- 30:: LAN
- 100:: data storage unit
- 110:: data table
- 120:: profile table
- 130:: requirement template table
- 140:: requirement table
- 150:: integration plan management table
- 160:: data file
- 200:: user requirement accepting unit
- 210:: requirement registration screen
- 300:: integration plan evaluation unit
- 400:: evaluation result display unit
- 410:: result display screen

## Claims

1. A data integration evaluation system comprising, upon a request for data integration for integrating a plurality of pieces of data, each of which has one or more columns, in a column direction:
a user requirement accepting unit that accepts the data to be integrated and requirements for the data integration;
an integration plan evaluation unit that creates integration plans, that is, an integration plan for each column of the data, on the basis of data values of the data and the requirements, which are accepted by the user requirement accepting unit, and evaluates the integration plan; and
an evaluation result display unit that outputs a result of the evaluation by the integration plan evaluation unit.

2. The data integration evaluation system according to claim 1,
wherein the integration plan evaluation unit evaluates the integration plan on the basis of statistics of the data.

3. The data integration evaluation system according to claim 2,
wherein the statistics of the data include a statistic indicating distribution of the data values of the data; and
wherein at least some of the requirements are designated relative to the statistic indicating the distribution of the data value.

4. The data integration evaluation system according to claim 1,
wherein the integration plan evaluation unit evaluates the integration plan according to a specified statistical method.

5. The data integration evaluation system according to claim 4,
wherein the at least some of the requirements are designated relative to a value calculated by executing the specified statistical method on the data.

6. The data integration evaluation system according to claim 1,
wherein the user requirement accepting unit is capable of accepting a special requirement for judging, on a column basis of the integration plans, whether or not to exclude any one of the integration plans from an evaluation target(s) of the integration plans by the integration plan evaluation unit, as one of the requirements.

7. The data integration evaluation system according to claim 1,
wherein the integration plan evaluation unit calculates individual evaluated values obtained by evaluating a relationship between columns using, as a unit, a combination of the columns between the data combined together according to the integration plan and calculates an evaluated value of the integration plan on the basis of a plurality of the individual evaluated values calculated for the integration plan.

8. The data integration evaluation system according to claim 7,
wherein the evaluation result display unit presents the integration plan recommended for the data integration on the basis of the evaluated value of the integration plan calculated by the integration plan evaluation unit.

9. The data integration evaluation system according to claim 1,
further comprising a data storage unit that stores specified information,
wherein the user requirement accepting unit stores the data and the requirements, which have been accepted, and profile information of the data in the data storage unit;
wherein the integration plan evaluation unit stores the created integration plan, data information of the integration plan, and an evaluation result obtained by evaluating the integration plan in the data storage unit; and
wherein the evaluation result display unit outputs the evaluation result by using information stored in the data storage unit.

10. The data integration evaluation system according to claim 9,
wherein requirement templates in which one or more requirements are gathered are stored in the data storage unit in advance; and
wherein the user requirement accepting unit presents an input screen capable of selecting a desired requirement template from the requirement templates stored in the data storage unit to a user and accepting a requirement for the data integration on the basis of the selection by the user on the input screen.

11. A data integration evaluation method comprising, upon a request for data integration for integrating a plurality of pieces of data, each of which has one or more columns, in a column direction:
a user requirement accepting step of accepting the data to be integrated and requirements for the data integration;
an integration plan creation step of creating integration plans, that is, an integration plan for each column of the data, on the basis of data values of the data and the requirements, which are accepted by the user requirement accepting unit;
an integration plan evaluation step of evaluating the integration plan created in the integration plan creation step; and
an evaluation result display step of outputting a result of the evaluation by the integration plan evaluation step.

12. The data integration evaluation method according to claim 11,
wherein in the integration plan evaluation step, the integration plan is evaluated on the basis of statistics of the data.

13. The data integration evaluation method according to claim 11,
wherein in the integration plan evaluation step, the integration plan is evaluated on the basis of a specified statistical method.

14. The data integration evaluation method according to claim 11,
wherein in the user requirement accepting step, a special requirement for judging, on a column basis of the integration plans, whether or not to exclude any one of the integration plans from an evaluation target(s) of the integration plans by the integration plan evaluation step can be accepted as one of the requirements.

15. The data integration evaluation method according to claim 11,
wherein in the integration plan evaluation step, individual evaluated values obtained by evaluating a relationship between columns using, as a unit, a combination of the columns between the data combined together according to the integration plan are calculated and an evaluated value of the integration plan is calculated on the basis of a plurality of the individual evaluated values calculated for the integration plan.
